Europäisches Patentamt

European Patent Office

Office européen des brevets

(19)

(11) Veröffentlichungsnummer: **0 021 375**
**B1**

(12) **EUROPÄISCHE PATENTSCHRIFT**

(45) Veröffentlichungstag der Patentschrift: **16.11.83**

(21) Anmeldenummer: **80103486.9**

(22) Anmeldetag: **21.06.80**

(51) Int. Cl.³: **H 01 G 4/04,** H 01 G 4/22, H 01 B 3/22

(54) **Imprägniermittel und seine Verwendung.**

(30) Priorität: **02.07.79 DE 2926609**

(43) Veröffentlichungstag der Anmeldung:
**07.01.81 Patentblatt 81/1**

(45) Bekanntmachung des Hinweises auf die Patenterteilung:
**16.11.83 Patentblatt 83/46**

(84) Benannte Vertragsstaaten:
**AT BE DE FR GB IT NL SE**

(56) Entgegenhaltungen:
DE - A - 2 310 807
DE - A - 2 446 422
DE - A - 2 718 905
DE - A - 2 823 758
DE - B - 2 248 716
DE - B - 2 700 569
FR - A - 2 345 800
GB - A - 1 520 141

**Die Akte enthält technische Angaben, die nach dem Eingang der Anmeldung eingereicht wurden und die nicht in dieser Patentschrift enthalten sind.**

(73) Patentinhaber: **BAYER AG**
**Zentralbereich Patente, Marken und Lizenzen**
**D-5090 Leverkusen 1, Bayerwerk (DE)**

(72) Erfinder: **Klein, Alfons, Ing. grad.**
**Virchowstrasse 9**
**D-4000 Düsseldorf (DE)**
Erfinder: **Kron, Rudolf, Ing. grad.**
**Burgweg 12**
**D-5090 Leverkusen (DE)**
Erfinder: **Wedemeyer, Karlfried, Dr.**
**Bilharzstrasse 7**
**D-5000 Köln 80 (DE)**
Erfinder: **Knust, Ernst, Dr.**
**Am Falkenberg 5**
**D-5090 Leverkusen 31 (DE)**
Erfinder: **Havenith, Lothar, Dr.**
**Schleiermacherstrasse 21**
**D-5090 Leverkusen (DE)**

Courier Press, Leamington Spa, England.

# 0 021 375

## Imprägniermittel und seine Verwendung

Die Erfindung betrifft Zusammensetzungen mit vorteilhaften dielektrischen Eigenschaften, die als Imprägniermittel in elektrischen Vorrichtungen verwendet werden können.

Aus der DE—OS 27 18 905 sind Kondensatoren bekannt, die 80 bis 99 Gew.-% monoalkylierte Diphenyle und 20 bis 1 Gew.-% dialkylierte Diphenyle enthalten. Im Beispiel III werden auch Gemische aus Mono-, Di-, und Triisopropyldiphenylen genannt. Der Gehalt an höher isopropyliertem Diphenyl insgesamt ist jedoch gering.

Aus der DE—OS 28 23 758 ist für den gleichen Verwendungszweck bekannt, daß das monoalkylierte Diphenyl zumindest 55 Gew.-% des meta-Isomeren enthält. Bevorzugt enthalten die in den beiden Offenlegungsschriften beschriebenen di-elektrischen Flüssigkeiten Anteile an einem Antioxidationsmittel und an einem Wasserstoffakzeptor.

Es ist ebenfalls bekannt, bei Dielektrika auf Basis von Phthalsäureestern Epoxide als Stabilisatoren und Hydrochinone als Oxidationsinhibitoren zu verwenden (DE—OS 24 46 422 und DE—AS 27 00 569).

Es wurden neue Zusammensetzungen mit dielektrischen Eigenschaften auf Basis von isopropylierten Diphenylen gefunden, die 30 bis 60 Gew.-Teile monoisopropylierte Diphenyle und 70 bis 40 Gew.-Teile mehrfach isopropylierte Diphenyle, von denen 60 bis 85 Gew.-Teile diisopropylierte, 10 bis 35 Gew.-Teile triisopropylierte und 0,5 bis 5 Gew.-Teile tetraisopropylierte Diphenyle bezogen auf die Gesamtmenge der mehrfach isopropylierten Diphenyle sind, enthalten.

Die mehrfach isopropylierten Diphenyle in den erfindungsgemäßen Zusammensetzungen enthalten bevorzugt im wesentlichen di-, tri- und tetra-isopropylierte Diphenyle.

In besonders bevorzugten erfindungsgemäßen Zusammensetzungen mit dielektrischen Eigenschaften enthalten die mehrfach isopropylierten Diphenyle 60 bis 85 Gew.-Teile diisopropylierte, 10 bis 35 Gew.-Teile triisopropylierte und 0,5 bis 5 Gew.-Teile tetra-isopropylierte Diphenyle, bezogen auf die Gesamtmenge der mehrfach isopropylierten Diphenyle.

Die isopropylierten Diphenyle in den erfindungsgemäßen Zusammensetzungen können in den möglichen Isomeren vorliegen. Beispielsweise kann das mono-isopropylierte Diphenyl im wesentlichen als meta- und para-Isomer, das diisopropylierte als para/para'-, meta/meta'-, para/meta'- und para/meta-Isomer, das triisopropylierte als para/met/meta'- und para/meta/para'-Isomer und das tetra-isopropylierte als para, meta/para', meta'- Isomer vorliegen.

Die Gemische erfindungsgemäßen isopropylierten Diphenyle sind an sich bekannt und können nach bekannten Verfahren hergestellt werden, beispielsweise durch Umsetzung von Diphenyl mit Propylen in Gegenwart von Friedel-Crafts-Katalysatoren (Hyska, K.; Chem. Prüm. *46'*, 264—270 (1971)).

Der 2,2-Bis-(4-hydroxy-phenyl)-propandiglycidyläther ist bekannt und kann durch Umsetzung von 2,2-Bis-(4-hydroxy-phenyl)-propan mit Epichlorhydrin hergestellt werden (DE—AS 27 00 569).

Oxidationsinhibitoren können vorzugsweise aromatische carbocyclische Verbindung mit zwei Hydroxygruppen sein. Beispielsweise sei Di-tert.-amyl-hydrochinon, 2,2-Bis-(4-hydroxyphenyl)-propan und 4,4'-Butylidenbis-(6-tert.-butyl-m-kresol), bevorzugt Di-tert.-amyl-hydrochinon, genannt.

Di erfindungsgemäßn Zusammensetzungen enthalten 90 bis 110 Gew.-Teile, bevorzugt 95 bis 100 Gew.-Teile, der isopropylierten Diphenyle, 0.05 bis 2,0 Gew.-Teile, bevorzugt 0,1 bis 1,0 Gew.-Teile, des Epoxids und 0,05 bis 2,0 Gew.-Teile, bevorzugt 0,1 bis 1,0 Gew.-Teile, des Hydrochinons.

Gegenstand der Erfindung ist außerdem die Verwendung der erfindungsgemäßen Zusammensetzung als Dielektrikum, besonders als Imprägnierungsmittel für elektrische Vorrichtungen. Als elektrische Geräte seien besonders Kondensatoren und Transformatoren genannt, insbesondere seien Kondensatoren mit einem Aufbau bestehend aus mehrlagigem Papier und Aluminiumfolie, aus metallisiertem Papier, aus einer metallisierten Kunststoff-Folie, beispielsweise aus Polypropylen, Polycarbonat oder Polyterepththalsäureester, oder aus einem Mischdielektrikum, beispielsweise aus Papier, Kunststoff, und Aluminiumfolie oder aus metallisiertem Papier und Kunststoff-Folie.

Die erfindungsgemäßen Zusammensetzungen können im allgemeinen durch Zusammengeben der Komponenten hergestellt werden.

Die erfindungsgemäßen Zusammensetzungen haben vorteilhafterweise einen geringeren Dampfdruck als bekannte Dielektrika und verändern daher ihre Zusammensetzung bei thermischer Belastung nicht. Dies ist beispielsweise bei Dielektrika, die 2,6-Di-tert.-butyl-4-methyl-phenol als Oxidationsinhibitor (DOS 28 23 758) enthalten, nicht gegeben. Bekanntlich hat 2,6-Di-tert.-butyl-4-methyl-phenol einen erheblichen Dampfdruck (VGB-Speisewassertagung 1971, Seite 12) und verändert daher seinen Gehalt im Dielektrikum bei thermischer Behandlung im Vakuum.

Die erfindungsgemäßen Dielektrika zersetzen sich während der Belastung praktisch nicht. So entstehen während der Belastung vorteilhafterweise praktisch keine sauren Spaltprodukte. Dies hat zur Folge, daß durch die erfindungsgemäßen Dielektrika praktisch keine Korrosion verursacht wird.

Der erfindungsgemäße Oxidationsinhibitor weist vorteilhafterweise eine gute dielektrische Verträglichkeit und bessere Löslichkeit in den anderen Komponenten der Zusammensetzung auf. Diese Mischungen haben einen niedrigeren Verlustfaktor, der sich auch bei hohen thermischen und elektrischen Belastungen nicht ändert.

2

**0 021 375**

Das erfindungsgemäße Imprägniermittel weist gegenüber den bereits bekannten gegebenenfalls stabilisierten Monoixopropyldiphenylen deutliche Vorteile auf.

So weist beispielsweise das erfindungsgemäße Gemisch einen höheren Flamm- und Brennpunkt auf. Dies zeigt sich auch deutlich in einem Test zur Prüfung der Entflammbarkeit.

Bei Verwendung der erfindungsgemäßen Zusammensetzungen erübrigt sich vorteilhafterweise der Zusatz eines Wasserstoffakzeptors.

Ein gutes dielektrisches Verhalten des Kondensators setzt voraus, daß sowohl das feste als auch das flüssige Dielektrikum weitgehend von Feuchtigkeit befreit ist. Die Trocknung des flüssigen Dielektrikums erfolgt in der Regel durch Behandlung mit getrockneten Bleicherden oder anderen geeigneten Adsorbenzien und/oder Vakuumbehandlung bei höherer Temperatur in einer Entgasungsanlage. Bei der Herstellung des Kondensators kommt es vor, daß das vorgetrocknete Tränkmittel nach der Imprägnierung mit feuchter Außenluft in Berührung kommt. Daher ist es wichtig, daß das verwendete Imprägnierungsmittel ein günstiges Hygroskopieverhalten zeigt.

Wird bespielsweise ein erfindungsgemäßes Gemisch im Vergleich mit dem bereits bekannten Monoisopropyldiphenyl in einer offenen Schale der Außenluft ausgesetzt (Temperatur 23°C, relative Luftfeuchtigkeit 50%, Durchmesser der Schale 14 cm, Volumen 100 ml, Zeit 24 Stunden), so zeigt das erfindungsgemäße Gemisch eine um 20% geringere Wasseraufnahme.

Die Wirksamkeit der erfindungsgemäßen Stabilisatorkombination gegenüber den bereits bekannten Stabilisatorsystemen wurde in einer Lebensdauerprüfung von Kondensatoren verglichen. Hierbei zeigt sich, daß die erfindungsgemäße Kombination in Kondensatoren bei der Lebensdauerprüfung eine geringere Ausfallrate aufweist. Außerdem sind die dielektrischen Verluste während dieser Lebensdauerprüfung bei dem erfindungsgemäßen Dielektrikum wesentlich niedriger als bei den bereits bekannten Systemen.

Beispiel 1

Zusammensetzung eines erfindungsgemäßen Imprägnierungsmittels

| | |
|---|---|
| m-Isopropyl-diphenyl | 25,4 Gew.-% |
| p-Isopropyl-diphenyl | 19,5 Gew.-% |
| mehrfach isopropyliertes Diphenyl | 54,5 Gew.-%*) |
| 2,2-Bis-(4-hydroxy-phenyl)-propan-diglycidyläther | 0,3 Gew.-% |
| Di-tert.-amyl-hydrochinon | 0,3 Gew.-% |

*) bestehend aus 78 Gew.-% diisopropylierten, 19 Gew.-% triisopropylierten und 3 Gew.-% tetraisopropylierten Diphenylen

Beispiel 2

Zusammensetzung eines erfindungsgemäßen Imprägnierungsmittels

| | |
|---|---|
| m-Isopropyl-diphenyl | 33,6 Gew.-% |
| p-Isopropyl-diphenyl | 22,5 Gew.-% |
| mehrfach isopropyliertes Diphenyl | 43,3 Gew.-%*) |
| 2,2-Bis-(4-hydroxy-phenyl)-propan-diglycidyläther | 0,3 Gew.-% |
| Di-tert.-amyl-hydrochinon | 0,3 Gew.-% |

*) bestehend aus 83 Gew.-% diisopropylierten, 15 Gew.-% triisopropylierten und 2 Gew.-% tetraisopropylierten Diphenylen

### Beispiel 3 (Vergleich)

Zusammensetzung eines bereits bekannten Imprägnierungsmittels (DE—OS 28 23 758)

| | |
|---|---|
| m-Isopropyl-diphenyl | 56,9 Gew.-% |
| p-Isopropyl-diphenyl | 40,4 Gew.-% |
| Diisopropyldiphenyl | 2,0 Gew.-% |
| $\beta$-Methyl-anthrachinon | 0,5 Gew.-% |
| Di-tert.-butyl-4-kresol | 0,2. Gew.-% |

### Beispiel 4

Lebensdauerprüfung von Kondensatoren imprägniert mit einem erfindungsgemäßen Dielektrikum.

Es werden je 10 Kondensatoren mit dem Dielektrikum nach den Beispielen 1 bzw. 2 gefüllt. Das Kondensatordielektrikum besteht aus zwei Lagen handelsüblichen Kondensatorpapiers der Stärke 10 $\mu$m und mit einer Dichte von 1,2 g/cm³. Als Elektroden werden Aluminiumfolien, die zwischen jeweils 2 Kondensatorpapierlagen angeordnet sind, verwendet.

Die Kondensatorrohwickel (ohne Gehäuse) werden bei einer Temperatur von 120°C unter eine Vakuum von $10^{-2}$ Torr 8 Stunden getrocknet. Anschließend wird die Imprägnierung unter Vakuum bei etwa 70°C mit dem erfindungsgemäßen Dielektrikum (nach Beispiel 1) durchgeführt.

Anschließend werden die imprägnierten Kondonsatorwickel in einem Aluminiumgehäuse mit Gießharz verschlossen und dann der Lebensdauerprüfung unterworfen.

Bei der Prüfung werden die Kondensatoren bei einer Temperatur von 100°C mit einer Wechselspannung von 600 bis 1000 Volt (Feldstärke; 30 bis 50 Volt $\mu$m) belastet. Die Feldstärkenbelastung wird während der gesamten Prüfung bei 30 Volt/ $\mu$m beginnend alle 250 Stunden um 5 Volt/ $\mu$m gesteigert. Sowohl während als auch nach der Prüfung werden die dielektrischen Verluste in Abhängigkeit von der Feldstärke bestimmt. Dabei ergeben sich auch nach der Prüfung Werte des Verlustfaktors, die gleich oder besser sind als die Werte vor der Prüfung.

Nach 2000 Stunden Prüfzeit ist keiner der Kondensatoren ausgefallen.

Dagegen zeigte diese Prüfung mit Kondensatoren, imprägniert mit dem Dielektrikum nach Beispiel 3, nach 600 Stunden bereits 3 Ausfälle.

### Beispiel 5

In Tabelle I sind die physikalischen Konstanten der erfindungsgemäßen Zusammensetzungen nach Beispiel 1 und 2 und als Vergleich nach Beispiel 3 engeführt. Die entsprechende Prüfvorschrift ist in Spalte 2 angegeben.

Die Entflammbarkeit wurde nach der folgenden Vorschrift bestimmt.

Auf einem geköperten Glasfaserband (Breite: 25 mm, Dicke: 0,26 mm) werden mit Tinte 2 Linien im Abstand von 300 $\pm$ 3 mm aufgetragen. Das Glasfaserband wird für 3 Minuten mit der Probe getränkt und dann auf zwei Haltestäben horizontal angeordnet. Hierbei wird das Glasfaserband an den Enden mit Gewichten beschwert. Zwei Minuten nach der Befestigung wird die Unterseite des Glasfaserbandes mit einem Gazestreifen leicht abgewischt. Die Probe wird 50 mm vor der rechtet mit Tinte markierten Linie auf dem Glasfaserband mit einem Bunsenbrenner entzündet; die Flamme des Brenners soll 20 bis 50 mm hoch sein. Während der Zündung sollen starke Luftbewegungen vermieden werden. Die Verbrennungszeit wird durch Messen der Zeit, welche die Flamme von der rechten bis zu der linken markierten Linie auf dem Glasfaserband benötigt, bestimmt.

Tabelle I, Physikalische Konstanten der Dielektrika nach Beispiel 1, 2 und 3

| | Prüfvorschrift | Dimension | Beispiel 1 | Beispiel 2 | Beispiel 3 (Vérgleichs-beispiel) |
|---|---|---|---|---|---|
| Farbe | — | — | farblos | farblos | farblos |
| Brechungsindex bei 20°C | DIN 53491 | — | 1,5720 | 1,5809 | 1,5840 |
| Viskosität bei 20°C | DIN 51561 | $mm^2 \cdot s^{-1}$ | 17 | 12 | 9 |
| Dichte bei 20°C | ISO R 649 DIN 51757 | $kg \cdot m^{-3}$ | 970 | 981 | 985 |
| Schrumpfung (von 100—20°C) | errechnet aus Dichte | % | 6 | 6 | 6 |
| Stockpunkt | DIN 51583 | °C | —49 | —54 | —54 |
| Flammpunkt | DIN 51584 | °C | 156 | 156 | 142 |
| Brennpunkt | DIN 51584 | °C | 166 | 166 | 156 |
| Wassergehalt | ISO R 760 DIN 51777 | ppm | <100 | <100 | <100 |
| Säurezahl | IEC DIN 53402 | $mg\,KOH \cdot g^{-1}$ | <0,01 | <0,01 | <0,02 |
| Dielektrizitätszahl ($\varepsilon_r$) 50 Hz,500V bei 20°C bei 90°C | IEC 250 DIN 53483 | — — | 2,6 2,4 | 2,7 2,5 | 2,6 2,3 |
| Verlustfaktor (tan δ) 50 Hz,500V bei 90°C | IEC 250 DIN 53483 | — | 0,0001 | 0,0003 | 0,0001 |
| spez. Durchgangswiderstand ($p_D$) 1000 V, 1 Min.bei 90°C | IEC 247 DIN 53482 | $G \cdot m$ | >1000 | >1000 | >1000 |
| Durchschlagsspannung ($U_d$) (von 20—90°C) | IEC 156 DIN 53481 | kV | 80 | 80 | 80 |
| Entflammbarkeit | | $mm \cdot s^{-1}$ | 6,9 | 7,0 | 8,6 |

**Patentansprüche**

1. Zusammensetzungen mit dielektrischen Eigenschaften auf Basis von isopropylierten Diphenylen, enthaltend 30 bis 60 Gew.-Teile monoisopropylierte Diphenyle und 70 bis 40 Gew.-Teile mehrfach isopropylierte Diphenyle, von denen 60 bis 85 Gew.-Teile diisopropylierte, 10 bis 35 Gew.-Teile triisopropylierte und 0,5 bis 5 Gew.-Teile tetraisopropylierte Diphenyle sind, bezogen auf die Gesamtmenge der mehrfach isopropylierten Diphenyle.

2. Zusammensetzungen nach dem Anspruch 1, enthaltend ein Epoxid und eine Hydrochinonderivat.

3. Zusammensetzungen nach den Ansprüchen 1 und 2, enthaltend 0,05 bis 2,0 Gew.-Teile des Epoxids und 0,05 bis 2,0 Gew.-Teile des Hydrochinonderivats.

4. Zusammensetzungen nach den Ansprüchen 1 bis 3, enthaltend als Epoxid 2,2-Bis-(4-hydroxyphenyl)-propandiglycidylether und als Hydrochinonderivat Di-tert.-amyl-hydrochinon.

**0 021 375**

Claims

1. Compositions which have dielectric properties and are based on isopropylated diphenyls, containing 30 to 60 parts by weight of mono-isopropylated diphenyls and 70 to 40 parts by weight of poly-isopropylated diphenyls, of which 60 to 85 parts by weight are di-isopropylated diphenyls, 10 to 35 parts by weight are tri-isopropylated diphenyls and 0.5 to 5 parts by weight are tetra-isopropylated diphenyls, based on the total amount of the poly-isopropylated diphenyls.

2. Compositions according to Claim 1, containing an epoxide and a hydroquinone derivative.

3. Compositions according to Claims 1 and 2, containing 0.05 to 2.0 parts by weight of the epoxide and 0.05 to 2.0 parts by weight of the hydroquinone derivative.

4. Compositions according to Claims 1 to 3, containing 2,2-bis-(4-hydroxy-phenyl)-propane diglycidyl ether, as the epoxide, and di-tert.-amyl-hydroquinone, as the hydroquinone derivative.

Revendications

1. Compositions douées de propriétés diélectriques à base de diphényles isopropylés, qui contiennent 30 à 60 parties en poids de diphényles monoisopropylés et 70 à 40 parties en poids de diphényles polyisopropylés, dont 60 à 85 parties en poids, par rapport à la quantité totale des diphényles polyisopropylés, sont des diphényles diisopropylés, 10 à 35 parties en poids des diphényles triisopropylés et 0,5 à 5 parties en poids des diphényles tétraisopropylés.

2. Compositions selon la revendication 1, caractérisées en ce qu'elles contiennent un époxyde et un dérivé d'hydroquinone.

3. Compositions selon les revendications 1 et 2, caractérisées en ce qu'elles contiennent 0,05 à 2,0 parties en poids de l'époxyde et 0,05 à 2,0 parties en poids du dérivé d'hydroquinone.

4. Compositions selon les revendications 1 à 3, caractérisées en ce qu'elles contiennent comme époxyde l'éther diglycidylique du 2,2-bis-(4-hydroxyphényl)-propane et comme dérivé d'hydroquinone la di-tert-amyl-hydroquinone.